Europäisches Patentamt

European Patent Office

Office européen des brevets

(11) Veröffentlichungsnummer: **0 531 825 A2**

# (12) EUROPÄISCHE PATENTANMELDUNG

(21) Anmeldenummer: **92114699.9**

(22) Anmeldetag: **28.08.92**

(51) Int. Cl.5: **C02F 1/26**

(30) Priorität: **07.09.91 DE 4129802**

(43) Veröffentlichungstag der Anmeldung:
**17.03.93 Patentblatt 93/11**

(84) Benannte Vertragsstaaten:
**BE DE FR GB IT PT**

(71) Anmelder: **BASF Aktiengesellschaft
Carl-Bosch-Strasse 38
W-6700 Ludwigshafen(DE)**

(72) Erfinder: **Kermer, Wolf-Dieter, Dr.
Im Schlittweg 4
W-6701 Fussgoenheim(DE)**
Erfinder: **Steenken-Richter, Ingrid, Dr.
Krappstrasse 18
W-6700 Ludwigshafen(DE)**
Erfinder: **Paulig, Juergen
Kolberger Strasse 1
W-6703 Limburgerhof(DE)**

(54) **Verfahren zur Abtrennung von Metallkomplex-Farbstoffen aus Abwässern.**

(57) Verfahren zur Abtrennung von Metallkomplex-Farbstoffen, die frei von reaktiven Gruppen sind und mindestens eine Hydroxysulfonylgruppe aufweisen, aus Abwässern mittels Aminen, die mindestens 6 Kohlenstoffatome aufweisen, gegebenenfalls in Gegenwart von mit Wasser nicht mischbaren inerten organischen Lösungsmitteln.

EP 0 531 825 A2

Rank Xerox (UK) Business Services
(3.10/3.5x/3.0.1)

Die vorliegende Erfindung betrifft ein neues Verfahren zur Abtrennung von Metallkomplex-Farbstoffen aus Abwässern mittels Aminen.

Beim Färben oder Bedrucken von textilen Fasern oder Geweben ziehen die zur Anwendung kommenden Farbstoffe meist nicht vollständig auf das textile Material, so daß in der Regel die resultierenden Abwässer noch Farbstoff enthalten.

Bei der Färbung von Fasern oder Geweben aus Wolle oder anderen natürlichen oder synthetischen Polyamiden, deren Mischungen untereinander oder beispielsweise mit Cellulose, Polyestern, Polyacrylnitril oder Polyurethanen ist dies besonders unerwünscht, da die hier zur Färbung verwendeten Farbstoffe häufig Schwermetallkomplexe von beispielsweise Azo- oder Azomethinfarbstoffen sind.

Aufgabe der vorliegenden Erfindung war es deshalb, ein neues Verfahren zur Abtrennung von Metallkomplex-Farbstoffen aus Färbereiabwässern bereitzustellen, das in einfacher Weise vorgenommen werden kann und mittels dessen die im Abwasser noch vorhandenen Farbstoffmengen praktisch quantitativ entfernt werden können. Ein besonderes Ziel der vorliegenden Erfindung war es außerdem, das Verfahren dergestalt durchzuführen, daß die aus dem Abwasser abgetrennten Metallkomplex-Farbstoffe wiederum in den Färbeprozeß zurückgeführt werden können.

Es wurde nun gefunden, daß die Abtrennung von Metallkomplex-Farbstoffen aus Abwässern, wobei die Metallkomplex-Farbstoffe frei von reaktiven Gruppen sind und mindestens eine Hydroxysulfonylgruppe aufweisen, vorteilhaft gelingt, wenn das Abwasser mit einem oder mehreren primären, sekundären oder tertiären Aminen, die mindestens 6 Kohlenstoffatome aufweisen, und gegebenenfalls mit einem mit Wasser nicht mischbaren inerten organischen Lösungsmittel behandelt, anschließend die Phasen trennt, die organische Phase mit wäßriger Lauge behandelt und schließlich den Metallkomplex-Farbstoff, der in der resultierenden wäßrigen Phase vorliegt, und das Amin, das gegebenenfalls in Mischung mit dem organischen Lösungsmittel vorliegt, jeweils abtrennt.

Außerdem wurde gefunden, daß mittels des erfindungsgemäßen Verfahrens auch einige lipophile, gegebenenfalls Halogen enthaltende Substanzen (z. B. Wollfett, lipophile Hilfsmittel oder Begleitstoffe von chlorierter Wolle) vom Abwasser abgetrennt werden können.

Bei den im erfindungsgemäßen Verfahren abzutrennenden Metallkomplex-Farbstoffen handelt es sich in der Regel um die Chrom-, Kobalt-, Kupfer-, Nickel- oder Eisen-Komplexe von Mono- oder Disazofarbstoffen. Diese liegen dabei im allgemeinen als 1:1 oder 1:2-Metallkomplexe vor.

Die Azofarbstoffe sind frei von reaktiven Gruppen und verfügen üblicherweise über eine oder mehrere Hydroxysulfonylgruppen. Außerdem können sie noch Carboxylgruppen aufweisen. Sie liegen dabei in der Regel als Salze vor, z.B. als Alkalisalze, wie Kalium- oder insbesondere Natriumsalze, oder als Ammoniumsalze.

Die metallisierten Gruppen befinden sich vorzugsweise jeweils in ortho-Stellung zur Azogruppe, z.B. in Form von o,o'-Dihydroxy-, o-Hydroxy-o'-carboxy-, o-Carboxy-o'-amino- oder o-Hydroxy-o'-amino-azogruppierungen.

Im Colour Index werden diese Farbstoffe als "Acid Dyes" bezeichnet. Beispielhaft seien C.I. Acid Yellow 99 (13900), C.I. Yellow 104, C.I. Acid Yellow 176, C.I. Acid Yellow 194, C.I. Acid Yellow 204, C.I. Acid Yellow 241, C.I. Acid Orange 74 (18745), C.I. Orange 142, C.I. Acid Red 186 (18810), C.I. Acid Red 214 (19355), D.I. Acid Red 315, C.I. Acid Red 357, C.I. Acid Red 359,C.I. Acid Red 362, C.I. Acid, Violet 58 (16260), C.I. Acid Violet 90 (18762), C.I. Acid Blue 159 (14880), C.I. Acid Blue 185, C.I. Acid Blue 193 (15707), C.I. Acid Blue 284, C.I. Acid Blue 296, C.I. Acid Blue 317, C.I. Acid Blue 342, C.I. Acid Brown 282, C.I. Acid Brown 289, C.I. Acid Brown 355, C.I. Acid Brown 365, C.I. Acid Green 12 (13425), C.I. Acid Green 104, C.I. Acid Green 108, C.I. Acid Black 52 (15711), C.I. Acid Black 187 oder C.I. Acid Black 194 genannt.

Weiterhin kommen z. B. auch die Farbstoffe C.I. Solvent Yellow 19 (13900:1), C.I. Solvent Yellow 21 (18690), C.I. Solvent Yellow 32 (48045), C.I. Solvent Orange 5 (18745:1), C.I. Solvent Orange 6 (18736:1), C.I. Direct Blue 86 oder C.I. Direct Blue 199 in Betracht.

Die im erfindungsgemäßen Verfahren zur Anwendung kommenden Amine sind entweder primäre, sekundäre oder tertiäre Amine. Sie weisen mindestens 6 Kohlenstoffatome auf und stammen aus der Reihe der Alkylamine. Die Alkylreste sind gegebenenfalls durch 1 oder 2 Sauerstoffatome in Etherfunktion unterbrochen und können durch Phenyl substituiert sein.

Geeignete primäre Amine sind z.B. Hexylamin, 2-Methylpentylamin, Heptylamin, 1-Ethylpentylamin, Octylamin, 2-Ethylhexylamin, Isooctylamin, Nonylamin, Isononylamin, Decylamin, Isodecylamin, Undecylamin, Dodecylamin, Tridecylamin, Isotridecylamin, (die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436), Tetradecylamin, Pentadecylamin, Hexadecylamin, Heptadecylamin, Octadecylamin, 3-(2-Ethylhexyloxy)propylamin oder 2-Phenylethylamin.

2

Geeignete sekundäre Amine sind z.B. N-Ethyl-N-butylamin, Dibucylamin, Diisobutylamin, N-Methyl-N-(2-ethylhexyl)amin, N-Ethyl-N-(2-ethylhexylamin), Bis (2-ethylhexyl) amin oder Diisotridecylamin.

Geeignete tertiäre Amine sind z.B. Tributylamin, N,N-Dimethyl-N-(2-ethylhexyl) amin oder N, N-Dimethyl-N-$C_{10}$/$C_{18}$-alkylamin (Gemisch).

Mit Wasser nicht mischbare inerte organische Lösungsmittel sind z.B. aliphatische Kohlenwasserstoffe, wie Pentan, Hexan, Heptan, Octan, 2-Ethylhexan, Isooctan, Nonan, Isononan, Decan, Isodecan, Undecan, Dodecan, Tridecan, Isotridecan, Cyclohexan, Petrolether, Leichtbenzin, Testbenzin, Petroleum, Kerosin oder deren Mischungen, oder aromatische Kohlenwasserstoffe, wie Benzol, Toluol, o-, m- oder p-Xylol, Dimethylnaphthalin oder deren Mischungen.

Bevorzugt ist eine Verfahrensweise, in der man das Abwasser mit Amin und einem mit Wasser nicht mischbaren inerten organischen Lösungsmittel behandelt. Dabei ist die Anwendung von aliphatischen Kohlenwasserstoffen hervorzuheben.

Bevorzugt ist weiterhin eine Verfahrensweise, in der man das Abwasser mit einem primären, sekundären oder tertiären Amin behandelt, das 6 bis 30, vorzugsweise 8 bis 26 Kohlenstoffatome aufweist.

Unter wäßriger Lauge im erfindungsgemäßen Sinn ist in der Regel 5 bis 50 gew.-%ige, vorzugsweise 5 bis 30 gew.-%ige Natron- oder Kalilauge zu verstehen. Die Verwendung von Natronlauge ist bevorzugt.

Das zu behandelnde Abwasser enthält, abhängig von der Farbtiefe, bis zu ca. 250 mg/l an Metallkomplex-Farbstoff (bezogen auf die reine Form). Eine Untergrenze der Farbstoffmenge im üblichen Sinne existiert nicht. Sie wird einzig durch die Wirtschaftlichkeit begründet, da das erfindungsgemäße Verfahren auch auf Abwässer mit sehr geringer Konzentration an Metallkomplex-Farbstoffen angewendet werden kann. Aus wirtschaftlichen Gründen sollte jedoch das Abwasser mindestens ca. 5 mg/l Metallkomplex-Farbstoff aufweisen.

Der pH-Wert des zu behandelnden Abwassers soll üblicherweise 1,5 bis 8,0 betragen. Bei der Anwendung von primären oder sekundären Aminen beträgt der pH-Wert vorzugsweise 1,5 bis 4. Bei der Anwendung von tertiären Aminen beträgt der pH-Wert vorzugsweise 3 bis 5,5.

Die Menge an primärem, sekundärem oder tertiärem Amin beträgt im erfindungsgemäßen Verfahren in der Regel 1 bis 10 Gew.-%, vorzugsweise 2 bis 5 Gew.-%, jeweils bezogen auf das Gewicht des zu behandelnden Abwassers.

Die Menge an mit Wasser nicht mischbarem inerten organischen Lösungsmittel beträgt im erfindungsgemäßen Verfahren in der Regel 0 bis 20 Gew.-%, vorzugsweise 4 bis 10 Gew.-%, jeweils bezogen auf das Gewicht des zu behandelnden Abwassers.

Sowohl von den Aminen als auch vom inerten organischen Lösungsmittel können auch größere Mengen als die obengenannten Mengen verwendet werden, jedoch bringt dies keine Vorteile.

Die Menge an wäßriger Lauge beträgt im erfindungsgemäßen Verfahren in der Regel 30 bis 300 Vol.-%, vorzugsweise 40 bis 150 Vol.-%, jeweils bezogen auf das Volumen der organischen Phase.

Das erfindungsgemäße Verfahren wird üblicherweise bei einer Temperatur von 5 bis 80°C, vorzugsweise 15 bis 40°C durchgeführt.

Das neue Verfahren wird zweckmäßig so durchgeführt, daß man das Abwasser in einer geeigneten Apparatur, z.B. in einem Rührkessel, bei der obengenannten Temperatur und dem obengenannten pH-Wert zunächst mit einem oder mehreren Aminen und gegebenenfalls mit organischem Lösungsmittel vermischt und 2 bis 45 Minuten rührt. Danach wird die organische Phase vom Abwasser, das einer weiteren Behandlung zugeführt werden kann, abgetrennt.

Die organische Phase kann gegebenenfalls mehrmals wiederverwendet werden und ist häufig erst nach fünf- bis zwanzigmaliger Verwendung vollständig mit Farbstoff gesättigt.

Die organische Phase wird dann bei der obengenannten Temperatur unter Rühren mit wäßriger Lauge behandelt. Nach einer Rührphase von 2 bis 45 Minuten können die wäßrige Phase, die den Metallkomplex-Farbstoff enthält, und das Amin, das gegebenenfalls in Mischung mit dem organischen Lösungsmittel vorliegt, durch Phasentrennung voneinander getrennt werden.

Die wäßrige Lösung kann in der Färberei nach Ansäuern gegebenenfalls anteilig einem frischen Färbebad zugesetzt werden.

Das zurückgewonnene Amin kann, gegebenenfalls zusammen mit dem inerten Lösungsmittel, zur Abtrennung von Metallkomplex-Farbstoff wiederverwendet werden. Im allgemeinen kann dies wiederum mehrmals geschehen, und zwar solange bis die organische Phase durch Verunreinigungen mit lipophilen Substanzen unbrauchbar geworden ist. Es kann aber auch, ebenso wie das inerte Lösungsmittel, z.B. mittels Destillation, regeneriert werden.

Das erfindungsgemäße Verfahren, das sowohl in kontinuierlicher als auch in diskontinuierlicher Arbeitsweise vorgenommen werden kann, ist einfach durchzuführen und liefert ein farbloses Abwasser, das im wesentlichen frei ist von Metallkomplex-Farbstoff. Vorteilhaft ist auch, daß bei der Abtrennung von halogenhaltigen Metallkomplex-Farbstoffen eine Absenkung des AOX-Wertes gemäß DIN 38 409-H14 im Abwasser erzielt wird. Der abgetrennte Farbstoff kann, wie oben bereits ausgeführt, wiederum dem Färbeprozeß zugeführt werden.

Die folgenden Beispiele sollen die Erfindung näher erläutern.

Allgemeine Färbevorschrift

I. 1:1 Metallkomplex-Farbstoffe

| | |
|---|---|
| Material: | nicht behandelte Wolle |
| Rezeptur: | 5 Gew.-% Farbstoff |
| | 5 Gew.-% konz. Schwefelsäure |
| | 2 Gew.-% Tensid auf Basis eines ethoxylierten Amins |
| | pH-Wert ca. 1,5 |
| Flottenverhältnis: | 1:20 |
| Temperaturverlauf: | Innerhalb von 60 Minuten auf 100ºC erhitzen und 60 Minuten bei dieser Temperatur halten. |

II. 1:2 Metallkomplex-Farbstoffe

| | |
|---|---|
| Material: | chlorierte Wolle |
| Rezeptur: | 5 Gew.-% Farbstoff |
| | 5 Gew.-% Ammoniumsulfat |
| | 0,5 Gew.-% Tensid auf Basis eines ethoxylierten Amins |
| | mit Essigsäure einen pH-Wert von 4,5 einstellen. |
| Flottenverhältnis: | 1:20 |
| Temperaturverlauf: | Innerhalb von 60 Minuten auf 100ºC erhitzen und 75 Minuten bei dieser Temperatur halten. |

Die so erhaltenen, nicht vollständig ausgezogenen Restflotten wurden teilweise ohne Einstellung des pH-Werts (d.h. bei einem pH-Wert von 2,3 bis 2,5 im Fall der 1:1-Metallkomplex-Farbstoffe und einem pH-Wert von 5 bis 5,5 im Fall der 1:2-Metallkomplex-Farbstoffe) für die in den Beispielen näher beschriebenen Entfärbeversuche verwendet. In einigen Versuchen wurde der pH-Wert variiert.

Beispiel 1

100 ml farbige Restflotte (Färbeverfahren I), enthaltend 204 mg/l des Farbstoffs C.I. Acid Red 214 (19355) wurden in einem Becherglas bei einer Temperatur von 25ºC und einem pH-Wert von 2,5 mit 5 ml Diisotridecylamin und 10 ml einer handelsüblichen Mischung aus aliphatischen Kohlenwasserstoffen (Shellsol® D70 der Fa. Shell) 5 Minuten gerührt. (Es ist auch möglich, diesen Schritt in einem Scheidetrichter mittels Schütteln durchzuführen.) Dann wurde der Rührprozeß beendet und die organische Phase vom Abwasser abgetrennt.

Das resultierende Abwasser enthielt noch 4 mg/l Farbstoff. Sein Chromgehalt, der vor der Behandlung 5 mg/l betrug, lag nun unter 0,2 mg/l.

In analoger Weise werden die in den folgenden Tabellen 1 und 2 aufgeführten Beispiele durchgeführt, wobei die Restflotten in Tabelle 1 aus dem Färbeverfahren I und die in Tabelle 2 aus dem Färbeverfahren II stammen.

Die Bestimmung der Extinktion wurde jeweils in einer Küvette mit einer Schichtdicke von 1 cm vorgenommen.

Dabei gilt folgendes:

a) In vier Durchgängen wurden jeweils 500 ml farbige Restflotte verwendet, die mit 10 ml Amin und 20 ml Lösungsmittel behandelt wurden.

b) Als Lösungsmittel diente Xylol.

c) Es wurden 500 ml farbige Restflotte verwendet.

d) In vier Durchgängen wurden jeweils 100 ml farbige Restflotte verwendet.

e) In drei Durchgängen wurden jeweils 500 ml farbige Restflotte verwendet, die mit 20 ml Amin und 40 ml Lösungsmittel behandelt wurden.

Tabelle 1

| Bsp. Nr. | Farbstoff | $\lambda_{max}$ [nm] | Farb-stoff Konz. [mg/l] | Amin | pH-Wert des Ab-wasser | Extinktion vorher | nachher | Chromgehalt [mg/l] vorher nachher | AOX [mg/l] vorher nachher |
|---|---|---|---|---|---|---|---|---|---|
| 2 | Mischung aus | 585 | 120 | Isotridecy-lamin | 2,3[a] | 0,750 | 0,000 | | |
| 3 | C.I.Acid Blue 158, | 585 | 120 | Isotridecy-lamin | 4,0 | 0,750 | 0,058 | | |
| 4 | C.I. Acid Red 186 und | 585 | 120 | Diisotride-cylamin | 2,3[a] | 0,750 | 0,000 | | |
| 5 | C.I. Acid Violet 58 | 585 | 120 | Diisotride-cylamin | 4,0 | 0,750 | 0,000 | | |

EP 0 531 825 A2

EP 0 531 825 A2

| Bsp. Nr. | Farbstoff | $\lambda_{max}$ [nm] | Farb- stoff Konz. [mg/l] | Amin | pH-Wert des Ab- wasser | Extinktion | | Chromgehalt [mg/l] vorher nachher | AOX [mg/l] vorher nachher |
|---|---|---|---|---|---|---|---|---|---|
| | | | | | | vorher | nachher | | |
| 6 | C.I. Acid Red 214 | 510 | 204 | Hexylamin | 2,3 | 1,628 | 0,200 | | |
| 7 | | 510 | 204 | Octylamin | 2,3 | 1,628 | 0,014 | | |
| 8 | | 510 | 204 | 2-Ethylhe- xylamin | 2,3 | 1,628 | 0,107 | | |
| 9 | | 510 | 204 | Isotridecy- lamin | 2,5 | 1,628 | 0,041 | 5 <0,1 | |
| 10 | | 510 | 204 | Diisotride- cylamin | 1,5 | 1,628 | 0,125 | | |
| 11 | | 510 | 204 | Diisotride- cylamin | 3,5 | 1,628 | 0,154 | | |
| 12 | | 510 | 204 | Diisotride- cylamin | 4,5 | 1,628 | 0,304 | | |
| 13[b] | C.I. Acid Yellow 104 | 436 | | Hexadecyl- amin | 3 | 2,211 | 0,000 | | |
| 14[b] | | 436 | | Hexadecyl- amin | 5,5 | 2,211 | 0,000 | | |

| Bsp. Nr. | Farbstoff | $\lambda_{max}$ [nm] | Farb-stoff Konz. [mg/l] | Amin | pH-Wert des Ab-wasser | Extinktion | | Chromgehalt [mg/l] vorher nachher | AOX [mg/l] vorher nachher |
|---|---|---|---|---|---|---|---|---|---|
| | | | | | | vorher | nachher | | |
| 15 | Mischung aus C.I. Acid Red 183 und C.I. Acid Red 186 | 510 | 135 | Diisotride-cylamin | 2,0c) | 1,137 | 0,043 | | 2,3 0,5 |
| 16 | | 510 | 135 | 3-(2-Ethyl-hexyloxy)-propylamin | 2,0 | 1,137 | 0,019 | | |
| 17 | | 510 | 135 | 3-(2-Ethyl-hexyloxy)-propylamin | 4,5 | 1,137 | 0,040 | | |
| 18 | Mischung aus C.I. Acid Blue 158, | 620 | | Tributyl-amin | 1,5 | 1,628 | hell-blau*) | | |
| 19 | C.I. Acid Blue 161 und C.I. Acid Red 186 | 620 | | Tributyl-amin | 2,5 | 1,628 | hell-blau*) | | |

*) Die resultierende Lösung war trüb, daher wurde eine visuelle Beurteilung vorgenommen.

EP 0 531 825 A2

Den Einfluß des Lösungsmittels auf die Entfärbung geben die folgenden Tabellen 3 und 4 wieder.

Tabelle 2

| Bsp. Nr. | Farbstoff | $\lambda_{max}$ [nm] | Farb-stoff Konz. [mg/l] | Amin | pH-Wert | Bewertung der Farbigkeit Ext. vorher  nachher  visuell*) | | Chromgehalt [mg/l] vorher nachher | AOX [mg/l] vorher nachher |
|---|---|---|---|---|---|---|---|---|---|
| 20 | | 585 | | Isotridecyl-amin | 2,5[d] | 1,571 | fast farblos | | |
| 21 | C.I. Acid Black 194 | 585 | | Diisotri-decylamin | 5,5[d] | 0,776 | farblos | | |
| 22 | | 585 | | Diisotri-decylamin | 5,0[e] | 2,457 | sehr schwach grau | 6 0,2 | |
| 23 | | 510 | 25 | Diisotri-decylamin | 5,5 | 0,464 | rosa | | |
| 24 | | 510 | 25 | Diisotri-decylamin | 2,1 | 0,464 | hellrosa | | 1,6 <0,5 |
| 25 | C.I. Acid Red 362 | 510 | 25 | Diisotri-decylamin | 1,5 | 0,464 | farblos | | |
| 26 | | 510 | 34 | Hexylamin | 5,5 | 0,627 | 0,016 | | |
| 27 | | 510 | 34 | Octylamin | 5,5 | 0,627 | farblos | | |
| 28 | | 510 | 34 | Octylamin | 7,0 | 0,627 | farblos | | |
| 29 | | 510 | 34 | 2-Ethyl-hexylamin | 5,5 | 0,627 | hellrosa | | |

*) Die resultierende Lösung war trüb, daher wurde eine visuelle Beurteilung vorgenommen.

8

Beispiel 30 bis 33

Jeweils 100 ml der erschöpften Färbeflotten (Färbeverfahren I) wurden mit 5 ml Octylamin und gegebenenfalls 10 ml eines Lösungsmittels 5 Minuten in einem Scheidetrichter geschüttelt. Danach wurde die wäßrige Phase abgelassen und ihre Extinktion bestimmt.

| Bsp. Nr. | Farbstoff | Amin | Lösungsmittel | pH-Wert des Abwassers | Extinktion | $\lambda_{max}$ [nm] |
|---|---|---|---|---|---|---|
| 30 | Mischung aus C.I. Acid Blue 158, C.I. Acid Violett 58 und C.I. Acid Red 186 | Octylamin | Shellsol D 70 | 2,3 | 0,000[f] | 585 |
| 31 | | Octylamin | Xylol | 2,3 | 0,015[f] | 585 |
| 32 | C.I. Acid Red 214 | Octylamin | Shellsol D 70 | 2,5 | 0,012[g] | 510 |
| 33 | | Octylamin | - | 2,5 | 0,028[g] | 510 |

[f] Extinktion vor der Behandlung: 0,750

[g] Extinktion vor der Behandlung: 1,628

Beispiel 34 bis 37

Nicht chlorierte Wolle wurde mit dem Farbstoff C.I. Acid Red 214 gefärbt. Die resultierende Restflotte (Färbeverfahren I) wies einen pH-Wert von 2,4 und eine Extinktion von 1,748 auf ($\lambda_{max}$ :510 nm). Jeweils 100 ml der Färbeflotte wurden einerseits mit 5 ml Isotridecylamin und andererseits mit 5 ml Diisotridecylamin, jeweils gelöst in 10 ml Lösungsmittel, im Becherglas gerührt.

Die Phasentrennung erfolgte nach 10 Minuten. Danach wurde die wäßrige Phase abgetrennt und ihre Extinktion bestimmt.

Die folgende Tabelle 4 enthält die Ergebnisse.

| Bsp. Nr. | Amin | Lösungsmittel | Extinktion nach Behandlung | $\lambda_{max}$ [nm] |
|---|---|---|---|---|
| 34 | Isotridecylamin | Shellsol D 70 | 0,041 | 510 |
| 35 | Diisotridecyamin | Shellsol D 70 | 0,085 | 510 |
| 36 | Isotridecylamin | Octan | 0,006 | 510 |
| 37 | Diisotridecylamin | Octan | 0,065 | 510 |

Beispiel 38

a) Mehrmalige Verwendung des Amins

Insgesamt 2 l farbige Restflotte (Färbeverfahren I), enthaltend eine Mischung der Farbstoffe C.I. Acid Blue 158, C.I. Acid Blue 161 und C.I. Acid Red 186, wurde in Portionen von 500 ml mit einer Mischung aus 20 ml Diisotridecylamin und 40 ml Shellsol D 70 bei einem pH-Wert von 1,6 ausgeschüttelt. Die nach der ersten Extraktion mit Farbstoff angereicherte Aminphase wurde zur Entfärbung des restlichen Abwassers noch dreimal weiterverwendet. Das resultierende Abwasser besaß eine Extinktion von 0,045 ($\lambda_{max}$: 620 nm), während die Extinktion der unbehandelten Lösung bei 1,289 lag

b) Rückgewinnung der organischen Phase und des Farbstoffs

60 ml des Amin/Lösungsmittel-Gemisches, das den Farbstoff sowie lipophile Substanzen aus dem Färbebad enthielt, wurden 5 Minuten lang mit 60 ml 25 gew.-%iger Natronlauge im Scheidetrichter geschüttelt. Nach erfolgter Phasentrennung wurden 59 ml schwach hellbrauner Aminphase zurückgewonnen. Der Farbstoff hatte sich praktisch vollständig in der wäßrigen Phase angereichert.

c) Wiederverwendung des Amins und des Farbstoffs

c1) Amin

500 ml Färbeflotte (siehe a)) wurden 3 Minuten lang mit 59 ml des zurückgewonnen Amin/Lösungsmittel-Gemisches bei einem pH-Wert von 1,6 geschüttelt. Nach der Abtrennung der organischen Phase wurde diese noch zweimal zur Entfärbung von jeweils 500 ml Abwasser verwendet. Die entfärbten Lösungen wurden vereinigt. Die Extinktion betrug 0,038.

c2) Farbstoff

Die unter b) beschriebene wäßrige Phase wurde mit verdünnter Schwefelsäure vorsichtig auf einen pH-Wert von 1,5 eingestellt und anschließend zur Färbung von Wolle (siehe Färbeverfahren I) verwendet. Die Farbstoffe zogen quantitativ auf die Wolle auf.

d) Zweite Rückgewinnung der organischen Phase

60 ml des Amin/Lösungsmittel-Gemisches wurden 3 Minuten lang mit 30 ml 50 gew.-%iger Natronlauge geschüttelt. Das Ergebnis war identisch dem unter b) beschriebenen Resultat.

Beispiel 39

Eine farbige Restflotte (Färbeverfahren I), die noch 120 mg/l einer Mischung der Metallkomplexfarbstoffe C.I. Acid Blue 158, C.I. Acid Violet 58 und C.I. Acid Red 186 enthielt, wurde in Anteilen von 100 ml 7 mal nacheinander mit 5 ml Isotridecylamin und 10 ml Shellsol D 70 bei einem pH-Wert von 2,3 gerührt. Die Extinktion des Abwassers nach der Behandlung betrug in allen sieben Fällen 0,000, während sie vorher 0,750 ($\lambda_{max}$ :620 nm) betrug.

Anschließend wurde die organische Phase, wie in Beispiel 38 beschrieben, mit 20 ml 50 gew.-%iger Natronlauge zurückgewonnen und wiederum zur Entfärbung von 3 x 100 ml Abwasser verwendet.

**Patentansprüche**

1.  Verfahren zur Abtrennung von Metallkomplex-Farbstoffen aus Abwässern, wobei die Metallkomplex-Farbstoffe frei von reaktiven Gruppen sind und mindestens eine Hydroxysulfonylgruppe aufweisen, dadurch gekennzeichnet, daß man das Abwasser mit einem oder mehreren primären, sekundären oder tertiären Aminen, die mindestens 6 Kohlenstoffatome aufweisen, und gegebenenfalls mit einem mit Wasser nicht mischbaren inerten organischen Lösungsmittel behandelt, anschließend die Phasen trennt, die organische Phase mit wäßriger Lauge behandelt und schließlich den Metallkomplex-Farbstoff, der in der resultierenden wäßrigen Phase vorliegt, und das Amin, das gegebenenfalls in Mischung mit dem organischen Lösungsmittel vorliegt, jeweils abtrennt.

2.  Verfahren nach Anspruch 1, dadurch gekennzeichnet, daß man das Abwasser mit Amin und einem mit Wasser nicht mischbaren inerten organischen Lösungsmittel behandelt.